# EUROPÄISCHE PATENTSCHRIFT

(11) **EP 1 447 202 B1**
(45) Veröffentlichungstag und Bekanntmachung des Hinweises auf die Patenterteilung: **04.01.2006**
(21) Anmeldenummer: 04001800.4
(22) Anmeldetag: 28.01.2004
(51) Int. Cl.: B29C 51/26, B29C 51/04

(54) **Halteeinrichtung an einer Antriebseinrichtung für Streckhelfer an einem kombinierten Form/Stanzwerkzeug**
Device for locking on a drive assembly stretch rods mounted on a combined forming and cutting tool
Dispositif de verrouillage à un dispositif d'entraînement pour tiges d'étirage d'une machine combineé de formage et de poinçonnage

(30) Priorität: 15.02.2003 DE 10306377
(43) Veröffentlichungstag der Anmeldung: 18.08.2004
(73) Patentinhaber: Adolf Illig Maschinenbau GmbH & Co. KG, 74081 Heilbronn (DE)
(72) Erfinder: Trautwein, Herbert, 71737 Kirchberg (DE); Trefz, Thomas, 71546 Grossaspach (DE); Kaufmann, Falk, 71732 Tamm (DE)

(56) Entgegenhaltungen:
- DE-C- 19 917 472
- DE-U- 20 116 922

## Beschreibung

Die Erfindung betrifft eine Antriebseinrichtung für die Streckhelfer zum mechanischen Vorformen einer erwärmten Kunststofffolie in einem kombinierten Form-/Stanzwerkzeug nach der Gattung des Hauptanspruches.

Aus der DE 199 17 472 C1 und der DE 198 15 189 A1 sind motorische Antriebe der Streckhelfer bekannt. Gegenüber hydraulischen Antrieben besteht der Nachteil, dass die Haltekraft in unterer Position geringer ist. Hydraulische Antriebe bedingen aber andererseits hohe Kosten für die Hydraulik, insbesondere wenn sie für eine hohe Taktzahl der Thermoformmaschine ausgelegt ist. Hygienische Gründe und ein hoher Lärmpegel sind weitere negative Folgen dieser Antriebsart.

Aus der DE 201 16 922 U1 ist es bekannt, die Streckhelfer dichtend im Niederhalter zu führen und den Raum hinter jedem Streckhelfer bei der Einleitung von Formluft zum Tiefziehen nicht mit dieser Formluft zu füllen. Durch diese Gestaltung wird Formluft eingespart. Dadurch, dass die Formluft mit einem Druck in der Größenordnung von 6 bar nur einseitig auf die Streckhelfer wirkt, wird eine hohe Kraft auf jeden Streckhelfer entgegen der Verschieberichtung zum Vorformen aufgebaut. Insbesondere servomotorische Antriebe haben Probleme, diesen Kräften entgegen zu wirken. In der genannten Schrift wird vorgeschlagen, eine Halteeinrichtung in ausgefahrener Position der Streckhelfer wirken zu lassen. Beispielhaft ist ein Schieber genannt, der in eine Ausnehmung im Streckhelfer oder in der Betätigungsstange eingefahren wird. Aufgrund dieser genannten Angriffspunkte muss davon ausgegangen werden, dass die Verriegelungseinrichtung Teil des Werkzeuges ist, also bei jedem Werkzeug vorgesehen sein muss. Dies verteuert das Werkzeug.

Der weitere Nachteil einer so gestalteten Halteeinrichtung liegt darin, dass exakt aufeinander abgestimmte Bewegungsabläufe stattfinden müssen, die die Taktzeit und damit die maximal mögliche Taktzahl der Thermoformmaschine negativ beeinflussen. So kann die Schieberbewegung zum Verriegeln erst gestartet werden, wenn die Streckhelfer ganz in Endlage stehen. Verfahrenstechnisch kann es aber - produktabhängig - vorteilhaft sein, die Formluft schon vor Erreichen der Endlage der Streckhelfer zuzuleiten. Dies ist aber bei Einsatz eines Schiebers oder einer anderen formschlüssigen Verriegelungseinrichtung nicht möglich, da durch die Formluft der Aufbau der Gegenkraft schon vor der Verriegelung stattfinden würde. Vor dem Einleiten der Rückwärtsbewegung der Streckhelfer muss sichergestellt sein, dass der Schieber wieder ganz zurückgefahren ist. Dies kann wegen der durch die Formluft aufgebauten Gegenkraft aber erst erfolgen, wenn der Formdruck weitgehend abgebaut ist, weil sich sonst die formschlüssigen Verriegelungsteile aufeinander pressen und ein Verschieben unter Lasst stattfinden müsste. Ein überschneidendes Verriegeln/-Entriegeln ― überschneidend mit der Fahrbewegung oder der Einleitung der Fahrbewegung der Streckhelfer ― ist bei formschlüssigen Verriegelungseinrichtungen nicht möglich. Findet es aus Gründen einer Fehlfunktion, einer Fehleinstellung bzw. Fehlprogrammierung der Steuerung statt führt es zum Beschädigen von Bauteilen. Diese nacheinander ablaufenden Bewegungsabläufe brauchen wertvolle Zeit und reduzieren die Taktzahl der Thermoformmaschine. Ferner ist eine formschlüssige Verriegelungseinrichtung immer an eine festgelegte Stellung der Streckhelfer gebunden - im vorliegenden Fall an die untere angefahrene Position der Streckhelfer. Eine Hubveränderung der angefahrenen Endlage ist nicht möglich - die Verriegelung käme nicht zustande.
Bei Einsatz von - in der genannten Schrift nicht erwähnten - kraftschlüssigen Halteeinrichtungen, z. B. von Bremseinrichtungen, entstehen immer dann Reibung und Verschleiß, wenn das Verriegeln außerhalb der Endlage der Streckhelfer wirksam ist, weil dann noch eine Fahrbewegung unter Verriegelung stattfindet. Also kann die Bremse erst als Folgesteuerung in Abhängigkeit der Bewegung der Streckhelfer geschaltet werden. Eine negative Taktzahlbeeinflussung ist damit genauso gegeben wie bei formschlüssigen Verriegelungseinrichtungen, will man diesen Verschleiß vermeiden.

Der Erfindung liegt die Aufgabe zugrunde, die Antriebseinrichtung für die Streckhelfer mit einer Halteeinrichtung zu versehen, die verschleißfrei arbeitet, auch bei überschneidender Wirksamkeit mit der Fahrbewegung der Streckhelfer und dies auch außerhalb einer definierten Endlage der Streckhelfer. Diese Halteeinrichtung sollte auch bei verändertem Hub der Streckhelfer wirksam werden und keine zeitlichen Einflüsse auf Bewegungsabläufe der Streckhelfer und Verfahrensabläufe des Tiefziehens ausüben, sodass eine hohe Taktzahl der Thermoformmaschine ermöglicht wird. Die Halteeinrichtung sollte keine werkzeugbezogenen Teile benötigen, sondern Teil der Antriebseinrichtung und nur einmal pro Thermoformmaschine erforderlich sein und dann für alle eingewechselten Form-/Stanzwerkzeuge passen.
Zur Lösung der Aufgabe werden zwei Ausführungen gemäß den Ansprüchen 1 und 10 vorgeschlagen. Weiterbildungen sind Merkmal der jeweiligen Unteransprüche. Die Ausführungsbeispiele der Erfindung sind anhand der schematischen Zeichnungen näher beschrieben. Es zeigen:

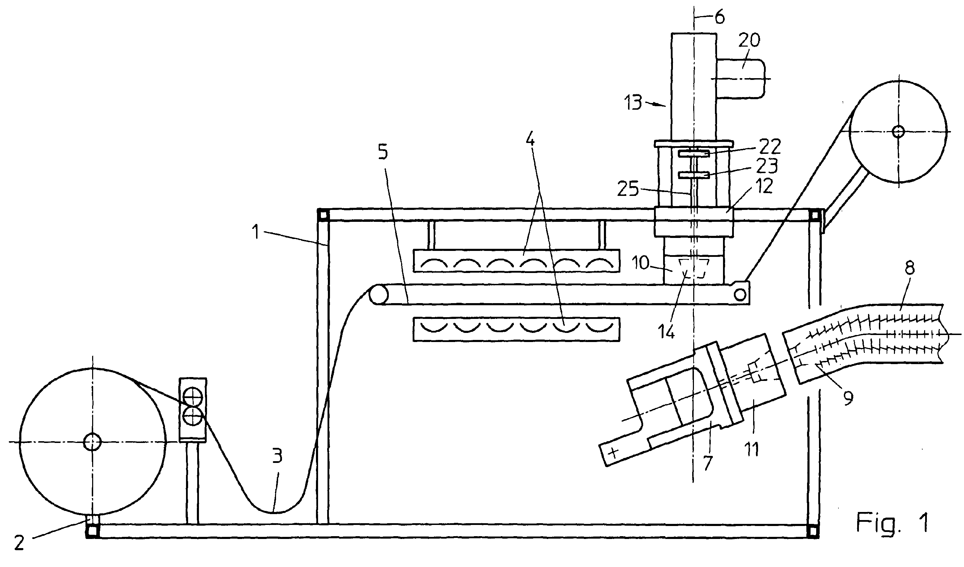

- Figur 1: eine von der Folienrolle arbeitende Thermoformmaschine mit einer Antriebseinrichtung für die Streckhelfer.
- Figur 2: einen Querschnitt durch eine motorische Antriebseinrichtung für die Streckhelfer mit einer ersten Ausführungsform der Halteeinrichtung.
- Figur 3: einen Querschnitt durch eine pneumatische Antriebseinrichtung für die Streckhelfer mit einer zweiten Ausführungsform der Halteeinrichtung.
- Figur 4: einen Querschnitt durch eine motorische Antriebseinrichtung für die Streckhelfer mit einer dritten Ausführungsform der Halteeinrichtung.
- Figuren 5-7: verschiedene Ausführungsformen einer Halteeinrichtung

Die Antriebseinrichtung wird eingesetzt bei einer Thermoformmaschine mit einem kombiniert formenden und stanzenden Werkzeug zum Verformen einer erwärmten Folienbahn aus thermoplastischem Kunststoff. In einem Gestell 1 sind die wesentlichen Teile der Thermoformmaschine untergebracht. Eine Rollenaufnahme 2 steht eingangsseitig und entfällt, wenn die zu verformende Folienbahn 3 direkt von einem Extruder zugeführt wird. Auch die Heizeinrichtung 4 ist bei Extruderverkettung eventuell nicht erforderlich. Eine intermittierend betriebene Transporteinrichtung 5 führt die Folienbahn 3 zu einer Formstation 6, in der mittels Druckluft oder Vakuum Behälter 9 geformt werden. Nach dem Absenken und ggf. Schwenken des Formtisches 7, der das Unterteil 11 des kombinierten Form-/Stanzwerkzeuges trägt, werden die Behälter 9 in Stapelrinnen 8 ausgestoßen.

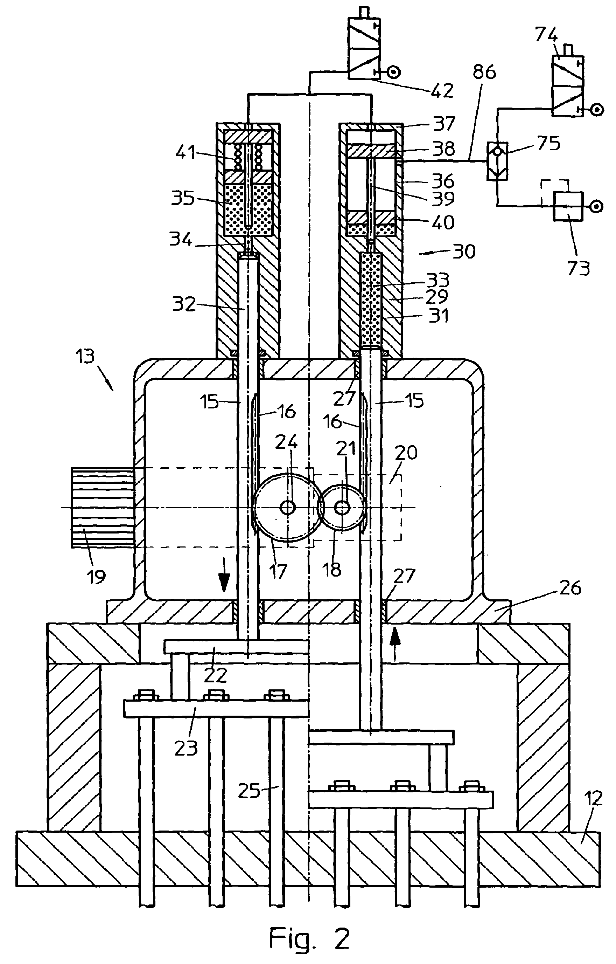

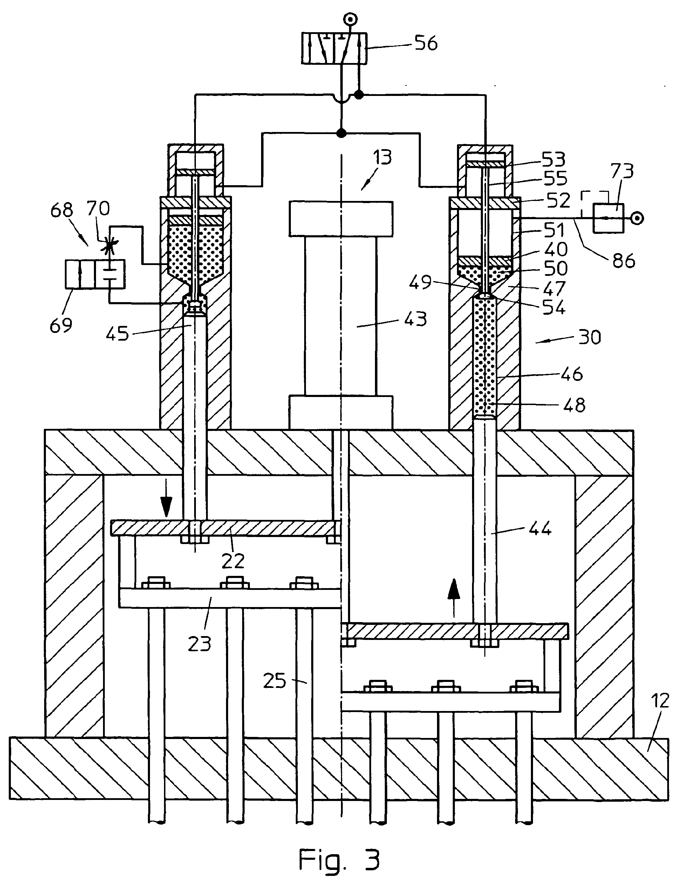

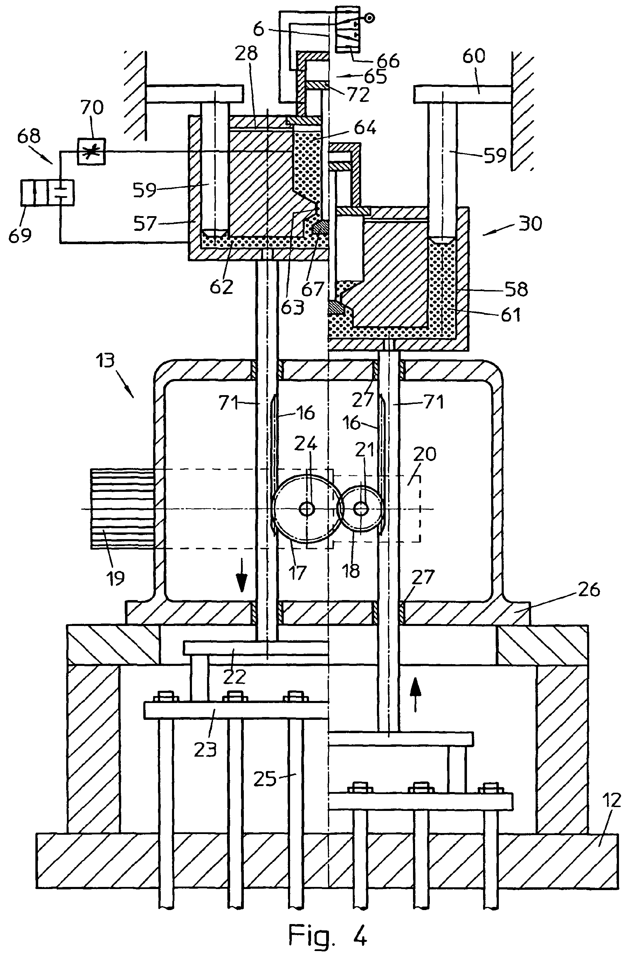

Das Oberteil 10 des Form-/Stanzwerkzeuges sitzt an einem Obertisch 12, an dem auch die Antriebseinrichtung 13 für mechanisch wirkende Streckhelfer 14 sitzt und die beispielsweise als motorischer Antriebseinrichtung näher in den Figuren 2 und 4 dargestellt ist. Die Erfindung kann aber in gleicher Weise auch bei einem pneumatisch wirkenden Antrieb - wie in Figur 3 dargestellt - eingesetzt werden.

Die motorische Antriebseinrichtung 13 in den Ausführungsbeispielen gemäß den Figuren 2 und 4 besteht aus zwei Stangen 15, 71 mit einem Bereich 16, der eine Verzahnung aufweist, wobei in dieser Verzahnung je ein Zahnrad 17, 18 kämmt. Beide Zahnräder 17, 18 kämmen zudem ineinander und ein Zahnrad 18 steht mit einem Antrieb 19 in Wirkverbindung. Aus baulichen Gründen kann die Antriebsachse des Antriebes 19 horizontal wie dargestellt liegen und über ein Winkelgetriebe 20 erfolgt der Antrieb der Welle 21, auf der das Zahnrad 18 sitzt. Die beiden Stangen 15, 71 sitzen im Gehäuse 26 mit Führungen 27 zu deren Längsführung. Die Wellen 21, 24 der Zahnräder 17, 18 sind im Gehäuse 26 gelagert. Beide Stangen 15, 71 sind mit einer Halteplatte 22 verbunden, an der die Trägerplatte 23 befestigt ist. Diese Trägerplatte 23 ist Teil des kombinierten Form-/Stanzwerkzeuges, an ihr sind die Stangen 25 befestigt, die die Streckhelfer 14 tragen.
Gemäß einer ersten Ausführungsform, dargestellt in Figur 2 in zwei Endlagen, besteht die allgemein mit Pos. 30 bezeichnete Halteeinrichtung aus einem jeder Stange 15 zugeordneten Gehäuse 29 mit einer Bohrung 31, in der das Stangenende 32 dichtend geführt ist. Der durch die Bohrung 31 gebildete Raum 33 ist mit einer Flüssigkeit - Öl, Wasser, Emulsion - gefüllt und steht über eine Verbindungsbohrung 34 mit einem Vorratsraum 35 in Verbindung. Dieser Vorratsraum 35 wird durch eine Bohrung 36 gebildet, die im Durchmesser größer ist als die Bohrung 31. Sie wird von einem Deckel 37 verschlossen. In ihr ist ein verschiebbarer Kolben 38 angeordnet, an dem mittig ein Bolzen 39 sitzt und dessen Querschnitt - zumindest am gegenüberliegenden Ende - dem Querschnitt der Bohrung 34 zwischen Raum 33 und Vorratsraum 35 entspricht. Ferner ist in Weiterbildung der Erfindung ein Kolben 40 zwischen Kolben 38 und Verbindungsbohrung 34 verschiebbar angeordnet und über eine Feder 41 auf Abstand zum Kolben 38 gehalten und sorgt dadurch für einen zusätzlichen Druck auf die Flüssigkeit, wenn sich die Streckhelfer 14 nach unten bewegen. Ein solcher Kolben 40 ist prinzipiell auch bei den Ausführungen gemäß den Figuren 3 und 4 einsetzbar. Anstatt über eine Feder 41 kann die erforderliche Andruckkraft auch über Druckluft aufgebracht werden, wie es in Figur 3 rechts durch das Druckregelventil 73 und die Leitung 86 dargestellt ist. Der Kolben 40 bildet den Abschluss des mit Flüssigkeit gefüllten Vorratsraumes 35, 50. Wenn man diese Lösung bei der Ausführung gemäß Figur 2 wählt erfolgt die Druckluftführung über das Druckregelventil 73 und parallel dazu über ein Ventil 74, die beide zum Wechselventil 75 führen. Sinn dieser Ausbildung ist es, den Kolben 38 über diesen wechselnden Druck zu bewegen in Zusammenarbeit mit dem Ventil 42 und auch während der Abwärtsbewegung des Kolbens 38 durch einen geringen Druck den Kolben 40 zu beaufschlagen.
Der Raum zwischen Kolben 38 und Deckel 37 ist über ein Ventil 42 zeitweise mit Druckluft beaufschlagbar, das zum Verschieben des Kolbens 38 mit Bolzen 39 aus der in Figur 2 links dargestellten Lage in der Weise führt, dass der Bolzen 39 die Verbindungsbohrung 34 verschließt (Figur 2 rechts).

Bei der zweiten Ausführungsform, dargestellt in Figur 3, ist als Antriebseinrichtung 13 ein pneumatischer Antrieb in Form eines Zylinders 43 vorgesehen, der an der Halteplatte 22 angreift. An der Halteplatte 22 sitzen mindestens zwei Stangen 44, deren Stangenende 45 dichtend in einer Bohrung 46 eines zugeordneten Gehäuse 47 geführt ist. Der durch die Bohrung 46 gebildete Raum 48 ist mit einer Flüssigkeit - Öl, Wasser, Emulsion - gefüllt und steht über eine Verbindungsbohrung 49 mit einem Vorratsraum 50 in Verbindung. Dieser Vorratsraum 50 wird durch eine Bohrung 51 im Gehäuse 47 gebildet und von einem Deckel 52 verschlossen. Im Raum 48 ist ein über einen pneumatischen, von einem Ventil 56 gesteuerter Antrieb in Form eines Kolbens 53, der über eine Stange 55 mit einem Ventilteller 54 verbunden ist, angeordnet, der die Verbindungsbohrung 49 absperren bzw. freigeben kann.

Figur 4 zeigt einen motorischen Antrieb analog zu Figur 2, wobei jedoch an den Stangen 71 ein Gehäuse 57 fest montiert ist. Dieses Gehäuse 57 weist, ausgehend von der gegenüberliegenden Seite, mindestens zwei Bohrungen 58 zur Bildung je eines Raumes 61 auf, in denen je ein Bolzen 59 dichtend geführt ist. Dabei sind diese Bolzen 59 mit Laschen 60 an feststehenden Bauteilen der Formstation 6 befestigt. Alle Bohrungen 58 bzw. Räume 61 sind über eine Querbohrung 62 miteinander und über eine Verbindungsbohrung 63 mit mindestens einem Vorratsraum 64 verbunden. Die Räume 61, die Querbohrung 62 und ein Teil des Vorratsraumes 64 sind mit einer Flüssigkeit gefüllt. Über einen pneumatischen Antrieb 65 kann entweder ein Ventilteller 67 oder - analog zur Ausführung gemäß Figur 2 - ein Bolzen mit einem Querschnitt entsprechend dem Querschnitt der Verbindungsbohrung 63 so bewegt werden, dass er den Vorratsraum 64 von den Räumen 61 absperrt bzw. freigibt. Hierzu sind Ventilteller 67 bzw. Bolzen mit einem Kolben 72 verbunden, der über das Ventil 66 angesteuert und bewegt wird.

Über eine Leckageleitung 28 wird Flüssigkeit, die zwischen Bohrung 58 und Bolzen 59 im Falle einer Leckage nach außen dringen würde, in den Vorratsraum 64 zurückgeführt, sodass diese Ausführung besonders hygienefreundlich ist und keine Verschmutzungsgefahr für tiefgezogene Behälter besteht.

Die Wirkungsweise der Halteeinrichtung 30 ist wie folgt:

Nach dem Schließen des kombinierten Form-/Stanzwerkzeug, das dadurch die erwärmte Folienbahn 3 abschnittsweise einspannt, werden die Streckhelfer 14 über die Antriebseinrichtung 13 nach unten bewegt. Dabei füllen sich die Räume 33, 48, 61 mit Flüssigkeit, die aus den zugeordneten Vorratsräumen 35, 50, 64 nachströmt. Gegen Ende der Abwärtsbewegung der Streckhelfer 14 oder - je nach verfahrenstechnischen Einstellungen - mit Beendigung der Abwärtsbewegung wird die Formluft zum Druckluftformen der Behälter 9 zugeführt. Gleichzeitig mit der Druckluftzufuhr werden die Verbindungsbohrungen 34, 49, 63 durch die vorgesehenen Absperreinrichtungen 39, 54, 67 abgesperrt. Die durch die Formluft entstehenden Kräfte auf die Streckhelfer 14 werden auf die Stangen 15, 44, 71 übertragen und vom Flüssigkeitspolster in den Räumen 33, 48, 61 aufgenommen. Dabei ist es prinzipiell möglich, die Halteeinrichtung 30 nach jedem beliebigen Hub der Streckhelfer 14 wirken zu lassen, sodass dieser veränderbar und damit optimierbar entsprechend dem erforderlichen Verfahrensablauf sein kann. Ein zu frühes Einfallen oder Lösen der Halteeinrichtung 30 hat keinerlei Auswirkungen auf den Verschleiß beteiligter Bauteile. Auch durch den normalen Betrieb tritt kein Verschleiß auf. Absperren und Freigeben durch die Halteeinrichtung 30 laufen zeitlich während anderer Verfahrensabläufe ab und bedingen keine Zeit, die die Taktzeit beeinflusst.

Eine Weiterbildung der Halteeinrichtung 30 besteht in der Anordnung eines Bypassventils 68. Dabei handelt es sich um eine Verbindungsleitung zwischen den Räumen 33, 48, 61 und den zugehörigen Vorratsräumen 35, 50, 64, die über ein Ventil 69 geöffnet oder geschlossen wird. Vorzugsweise ist eine einstellbare Drossel 70 eingebaut. Die Funktion des Bypassventils 68 besteht darin, vor der Aufwärtsbewegung der Streckhelfer 14, also nachdem sich der Formdruck aufgebaut hat und eine hohe Kraft auf die Streckhelfer wirkt, den hohen Druck in der Flüssigkeit schnell abzubauen, sodass der Antrieb für die Streckhelfer 14 davon entlastet ist. Man kann auf diese Weise bei noch anstehendem Formdruck die Streckhelfer 14 bereits aufwärts fahren ohne negative Auswirkungen auf den Antrieb der Streckhelfer 14 und ohne eine hohe Kraft für das Betätigen der Sperreinrichtung aufbringen zu müssen, falls diese aus einem Ventilteller 54, 67 besteht. Denn in diesem Fall muss das Öffnen der Sperreinrichtung entgegen der Druckwirkung der Flüssigkeit vorgenommen werden. Bei Einsatz eines Bolzens 39 anstelle eines Ventiltellers 54, 67 - wie in Fig. 3 dargestellt - kann ein solches Bypassventil 68 eine Querschnittsvergrößerung des in der Praxis relativ kleinen Querschnittes der Verbindungsbohrung 34 bewirken. Folge ist eine rascher ablaufende Aufwärtsbewegung der Steckhelfer 14.

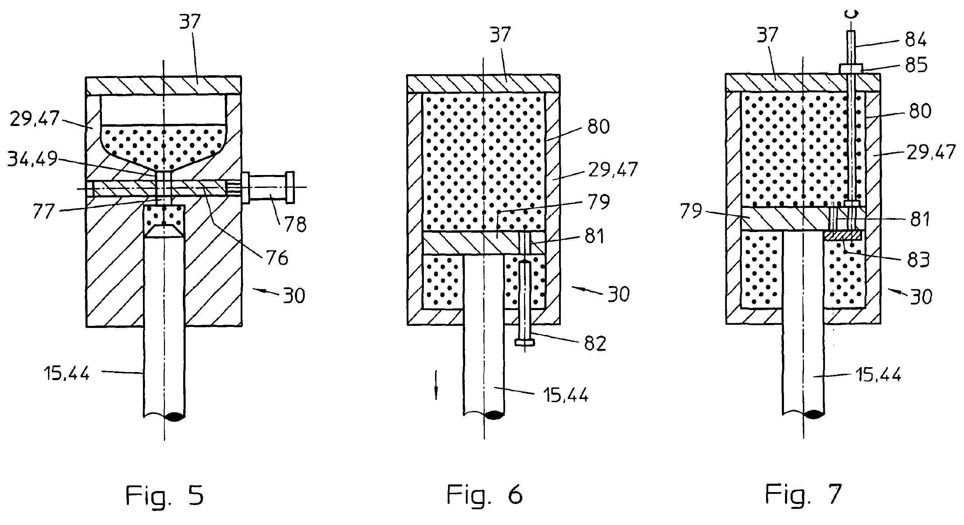

Verschiedene Ausführungsformen der Absperreinrichtung zeigen die Figuren 5 bis 7. Gemäß Figur 5 wird vorgeschlagen, zum Absperren der Verbindungsbohrung 34, 49 einen horizontal über einen Antrieb 78 bewegbaren Schieber 76 in Form eines Bolzens oder einer Platte einzusetzen, dessen Bohrung 77 in Deckung gebracht werden kann mit der Verbindungsbohrung 34, 49 bzw. diese verschließt. Gemäß des Vorschlages nach Figur 6 sind die Stangen 15, 44 mit einer Platte 79 verbunden, die in einer Bohrung 80 im Gehäuse 29, 47 gleitet. Die Platte 79 weist eine Bohrung 81 auf, die in unterer Stellung auf einen lagemäßig einstellbaren Bolzen 82 trifft, die ihn in Endlage verschließt.
Gemäß Figur 7 wird vorgeschlagen, diese Bohrung 81 bei einer Ausführung gemäß Figur 6 dadurch zu verschließen, dass man einen Teller 83 über eine Stange 84 zwischen einer offenen und einer geschlossenen Stellung verdreht. Teller 83 einschließlich Stange 84 werden gemeinsam mit dem Teller 79 verschoben, die Stange 84 wird im Deckel 37 geführt und von einem Antrieb 85 verdreht.

## Patentansprüche

1. Antriebseinrichtung für die Streckhelfer (14) zum mechanischen Vorformen einer erwärmten Kunststofffolie (3) in einem kombinierten Form-/Stanzwerkzeug vor oder während ihres Verformens zu Behältern (9) mittels Druckluft, bei dem jeder Streckhelfer (14) in der Bohrung des zugeordneten Niederhalters geführt und zu dessen Wandung abgedichtet ist und alle Streckhelfer (14) mit einer gemeinsamen Halteplatte (22) verbunden und mit einer Halteeinrichtung (30) zum Festhalten der Streckhelfer (14) versehen sind, **dadurch gekennzeichnet, dass** die Halteplatte (22) mit mindestens zwei Stangen (15, 44) verbunden ist, deren Stangenende (32, 45) in einem mit einer Flüssigkeit gefüllten, in einem ortsfesten Gehäuse (29, 47) angeordneten Raum (33, 48) verläuft, der über eine Verbindungsbohrung (34, 49) mit einem Vorratsraum (35, 50) für die Flüssigkeit verbunden ist, und die Antriebseinrichtung eine Absperreinrichtung zum Sperren bzw. Freigeben der Verbindungsbohrung (34, 49) zwischen Raum (33, 48) und Vorratsraum (35, 50) aufweist.

2. Antriebseinrichtung nach Anspruch 1, **dadurch gekennzeichnet, dass** die Absperreinrichtung aus einem Bolzen (39) besteht, dessen Querschnitt dem Querschnitt der Verbindungsbohrung (34) entspricht und der mit einem über einen Antrieb verschiebbaren Kolben (38) verbunden ist.

3. Antriebseinrichtung nach Anspruch 1, **dadurch gekennzeichnet, dass** die Absperreinrichtung aus einem senkrecht zur Verschieberichtung der Stangen (15, 44) beweglichen Schieber (76) besteht, der eine Bohrung (77) aufweist, die in Deckung mit der Verbindungsbohrung (34, 49) gebracht werden kann.

4. Antriebseinrichtung nach Anspruch 1, **dadurch gekennzeichnet, dass** die Absperreinrichtung durch einen mit den Stangen (15, 44) verbundenen Teller (79) mit einer Bohrung (81) gebildet wird, der in der Bohrung (80) des Gehäuses (29, 47) geführt ist, wobei die Bohrung (81) in Endlage auf einen sie verschließenden Bolzen (82) trifft.

5. Antriebseinrichtung nach Anspruch 1, **dadurch gekennzeichnet, dass** die Absperreinrichtung durch einen mit den Stangen (15, 44) verbundenen Teller (79) mit einer Bohrung (81) gebildet wird, der in der Bohrung (80) des Gehäuses (29, 47) geführt ist, wobei die Bohrung (81) über einen drehbaren Teller (83) verschließbar ausgebildet ist

6. Antriebseinrichtung nach Anspruch 1, **dadurch gekennzeichnet, dass** die Absperreinrichtung aus einem über einen Antrieb verschiebbaren Ventilteller (54) besteht, der gegen eine Dichtfläche am Übergang zwischen Raum (48) und Vorratsraum (50) bewegbar ist.

7. Antriebseinrichtung nach einem der Ansprüche 1 bis 6, **dadurch gekennzeichnet, dass** der Vorratsraum (35, 50) von einem gefederten oder mit Druckluft beaufschlagten Kolben (40) begrenzt ist.

8. Antriebseinrichtung nach einem der Ansprüche 1 bis 7, **dadurch gekennzeichnet, dass** zwischen den Räumen (33, 48) und dem Vorratsraum (35, 50) ein Bypassventil (68) vorgesehen ist.

9. Antriebseinrichtung nach Anspruch 8, **dadurch gekennzeichnet, dass** im Bypassventil (68) eine einstellbare Drossel (70) integriert ist.

10. Antriebseinrichtung für die Streckhelfer (14) zum mechanischen Vorformen einer erwärmten Kunststofffolie (3) in einem kombinierten Form-/Stanzwerkzeug vor oder während ihres Verformens zu Behältern (9) mittels Druckluft, wobei jeder Streckhelfer (14) in der Bohrung des zugeordneten Niederhalters geführt und zu dessen Wandung abgedichtet ist und alle Streckhelfer (14) mit einer gemeinsamen Halteplatte (22) verbunden und mit einer Halteeinrichtung (30) zum Festhalten der Streckhelfer (14) versehen sind, **dadurch gekennzeichnet, dass** die Halteplatte (22) durch mindestens zwei Stangen (71) mit einem Gehäuse (57) fest verbunden ist, das mindestens einen Vorratsraum (64) und mindestens zwei Räume (61) mit Flüssigkeit aufweist, die alle miteinander verbunden sind, durch einen in jedem Raum (61) dichtend geführten Bolzen (59), der mit feststehenden Bauteilen der Formstation verbunden ist, und die Antriebseinrichtung eine Absperreinrichtung zum Sperren bzw. Freigeben der Verbindungsbohrung (63) zwischen den Räumen (61) und dem Vorratsraum (64) aufweist.

11. Antriebseinrichtung nach Anspruch 10, **dadurch gekennzeichnet, dass** die Absperreinrichtung aus einem über einen Antrieb verschiebbaren Ventilteller (67) besteht, der gegen eine Dichtfläche zwischen Raum (61) und Vorratsraum (64) bewegbar ist.

12. Antriebseinrichtung nach Anspruch 11, **dadurch gekennzeichnet, dass** zwischen dem Vorratsraum (64) und der Bohrung für die Bolzen (59) eine Leckageleitung (28) verläuft.

13. Antriebseinrichtung nach Anspruch 11 oder 12, **dadurch gekennzeichnet, dass** zwischen den Räumen (61) und dem Vorratsraum (64) ein Bypassventil (68) vorgesehen ist.

14. Antriebseinrichtung nach Anspruch 13, **dadurch gekennzeichnet, dass** im Bypassventil (68) eine einstellbare Drossel (70) integriert ist.

## Claims

1. A drive device for the straightening aids (14) for mechanical preforming a heated plastic film (3) in a combination forming/die cutting tool before or during preforming thereof into containers (9) by means of compressed air, in which each straightening aid (14) is inserted in the hole of the assigned holding-down device and is sealed against the side thereof, and all straightening aids (14) are connected with a common retaining plate (22) and are furnished with a retaining device (30) for fastening the straightening aids, **characterized in that** the retaining plate (22) is connected to at least two rods (15, 44), of which the ends (32, 45) extend in a liquid-filled cavity (33, 48) arranged in a fixed housing, which cavity communicates with a reservoir (35, 50) for the liquid via a communicating hole (34, 49), and a drive device includes a blocking device for blocking or freeing the communicating hole (34, 49) between the cavity (33, 48) and the reservoir (35, 50).

2. The drive device according to claim 1, **characterized in that** the blocking device includes a bolt (39), the cross-section of which matches the cross-section of the communicating hole (34) and which is connected to a piston (38) that is movable via a drive unit.

3. The drive device according to claim 1, **characterized in that** the blocking device includes a slider (76) that is movable perpendicularly to the direction of displacement of the rods (15, 44), and which is furnished with a hole (77) that can be aligned with the communicating hole (34, 49).

4. The drive device according to claim 1, **characterized in that** the blocking device is formed by a plate (79) with a hole (81) that is connected to the rods (15, 44), and which is inserted into the hole (80) in the housing (29, 47), wherein in the end position the hole (81) is opposite a bolt (82) that seals it.

5. The drive device according to claim 1, **characterized in that** the blocking device is formed by a plate (79) with a hole (81) that is connected to the rods (15, 44), and which is inserted into the hole (80) in the housing (29, 47), wherein the hole (81) is conformed so as to be closable via a rotatable plate (83).

6. The drive device according to claim 1, **characterized in that** the blocking device includes a displaceable valve head (54), which is movable towards a sealing surface at the transition between cavity (48) and reservoir (50).

7. The drive device according to any of claims 1 to 6, **characterized in that** the reservoir (35, 50) is delimited by a piston (40) that is under load from a spring or compressed air.

8. The drive device according to any of claims 1 to 7, **characterized in that** a bypass valve (68) is provided between the cavities (33, 48) and the reservoir (35, 50).

9. The drive device according to claim 8, **characterized in that** an adjustable choke (70) is incorporated in the bypass valve (68).

10. A drive device for the straightening aids (14) for mechanical preforming a heated plastic film (3) in a combination forming/die cutting tool before or during preforming thereof into containers (9) by means of compressed air, wherein each straightening aid (14) is inserted in the hole of the assigned holding-down device and is sealed against the side thereof, and all straightening aids (14) are connected with a common retaining plate (22), and include a retaining plate (30) for fastening the straightening aids (14), **characterized in that** the retaining plate (22) is permanently attached via at least two rods (71) to a housing (57) that has at least one reservoir (64) and at least two cavities (61) filled with liquid, all of which communicate with each other, via a bolt (59) that is inserted in sealing manner in each cavity (61), and which is connected to stationary components of the forming station, and the drive device includes a blocking device for blocking or freeing the communicating hole (63) between the cavities (61) and the reservoir (64).

11. The drive device according to claim 10, **characterized in that** the blocking device is formed by a valve head (67) that is displaceable via a drive unit, and that is movable towards a sealing surface between cavity (61) and reservoir (64).

12. The drive device according to claim 11, **characterized in that** a leakage line (28) extends between the reservoir (64) and the hole for the bolts (59).

13. The drive device according to either of claims 11 or 12, **characterized in that** a bypass valve (68) is provided between the cavities (61) and the reservoir (64).

14. The drive device according to claim 13, **characterized in that** an adjustable choke (70) is incorporated in the bypass valve (68).

## Revendications

1. Installation motrice pour les auxiliaires d'étirage (14) servant à l'ébauchage mécanique d'un film de matière plastique chauffé (3) dans un outillage de moulage/d'estampage combiné avant ou pendant son façonnage en récipients (9) au moyen d'air comprimé, où chaque auxiliaire d'étirage (14) est guidé dans l'alésage du serre-flan associé et est isolé par rapport à la paroi de celui-ci et tous les auxiliaires d'étirage (14) sont reliés à une plaque de retenue commune (22) et pourvus d'un dispositif de retenue (30) servant à maintenir les auxiliaires d'étirage (14), **caractérisée en ce que** la plaque de retenue (22) est reliée à au moins deux barres (15, 44) dont l'extrémité de barre (32, 45) s'étend dans une cellule (33, 48) remplie d'un liquide, laquelle cellule se situe dans un boîtier fixe (29, 47) et est reliée par un alésage de connexion (34, 49) à une cellule de stockage (25, 50) de liquide, et par l'installation motrice qui présente un dispositif de barrage servant à bloquer ou à libérer l'alésage de connexion (34, 49) entre la cellule (33, 48) et la cellule de stockage (35, 50).

2. Installation motrice selon la revendication 1, **caractérisée en ce que** le dispositif de barrage est composé d'un goujon (39) dont la section transversale équivaut à la section transversale de l'alésage de connexion (34) et qui est relié à un piston (38) déplaçable à l'aide d'une commande.

3. Installation motrice selon la revendication 1, **caractérisée en ce que** le dispositif de barrage est composé d'un curseur (76) mobile perpendiculairement au sens de déplacement des barres (15, 44) et qui présente un alésage (77) qui peut être amené en recouvrement avec l'alésage de connexion (34, 49).

4. Installation motrice selon la revendication 1, **caractérisée en ce que** le dispositif de barrage est composé d'un disque (79), comportant un alésage (81) et relié aux barres (15, 44), qui est guidé dans l'alésage (80) du boîtier (29, 47), l'alésage rencontrant en position finale un goujon (82) l'obturant.

5. Installation motrice selon la revendication 1, **caractérisée en ce que** le dispositif de barrage est composé d'un disque (79), comportant un alésage (81) et relié aux barres (15, 44), qui est guidé dans l'alésage (80) du boîtier (29, 47), l'alésage étant réalisé de manière à pouvoir être obturé par un disque tournant (83).

6. Installation motrice selon la revendication 1, **caractérisée en ce que** le dispositif de barrage est composé d'un disque de soupape (54) déplaçable à l'aide d'une commande et qui est mobile contre une surface d'étanchéité à la transition entre la cellule (48) et la cellule de stockage (50).

7. Installation motrice selon une des revendications 1 à 6, **caractérisée en ce que** la cellule de stockage (35, 40) est limitée par un piston (40) à suspension ou sollicité à l'air comprimé.

8. Installation motrice selon une des revendications 1 à 7, **caractérisée en ce qu'**entre les cellules (33, 48) et la cellule de stockage (35, 50), une soupape de dérivation (68) est prévue.

9. Installation motrice selon la revendication 8, **caractérisée en ce qu'**un restricteur réglable (70) est intégré dans la soupape de dérivation (68).

10. Installation motrice pour les auxiliaires d'étirage (14) servant à l'ébauchage mécanique d'un film de matière plastique chauffé (3) dans un outillage de moulage/d'estampage combiné avant ou pendant son façonnage en récipients (9) au moyen d'air comprimé, où chaque auxiliaire d'étirage (14) est guidé dans l'alésage du serre-flan associé et est isolé par rapport à la paroi de celui-ci et tous les auxiliaires d'étirage (14) sont reliés à une plaque de retenue commune (22) et pourvus d'un dispositif de retenue (30) servant à maintenir les auxiliaires d'étirage (14), **caractérisée en ce que** la plaque de retenue (22) est reliée fixement par au moins deux barres (71) à un boîtier (57) qui présente au moins une cellule de stockage (64) et au moins deux cellules (61) remplies de liquide et qui sont toutes reliées les unes aux autres par un goujon (59) guidé dans chaque cellule (61) de manière étanche et qui est relié à des composantes fixes de la station de moulage, et par l'installation motrice qui présente un dispositif de barrage servant à bloquer ou à libérer l'alésage de connexion (63) entre les cellules (61) et la cellule de stockage (64).

11. Installation motrice selon la revendication 10, **caractérisée en ce que** le dispositif de barrage est composé d'un disque de soupape (54) déplaçable à l'aide d'une commande et qui est mobile contre une surface d'étanchéité entre la cellule (61) et la cellule de stockage (64).

12. Installation motrice selon la revendication 11, **caractérisée en ce qu'**entre la cellule de stockage (64) et l'alésage pour les goujons (59), s'étend une conduite pour les fuites (28).

13. Installation motrice selon la revendication 11 ou 12, **caractérisée en ce qu'**entre les cellules (61) et la cellule de stockage (64), il est prévu une soupape de dérivation (68).

14. Installation motrice selon la revendication 13, **caractérisée en ce qu'**un restricteur réglable (70) est intégré dans la soupape de dérivation (68).
